Europäisches Patentamt

European Patent Office

Office européen des brevets

(11) Publication number: **0 170 278 B1**

# EUROPEAN PATENT SPECIFICATION

(45) Date of publication of patent specification: **14.10.92** (51) Int. Cl.5: **G07F 7/10**

(21) Application number: **85109623.0**

(22) Date of filing: **31.07.85**

(54) **System and method for automatic transaction.**

(30) Priority: **31.07.84 JP 159060/84**

(43) Date of publication of application:
**05.02.86 Bulletin 86/06**

(45) Publication of the grant of the patent:
**14.10.92 Bulletin 92/42**

(84) Designated Contracting States:
**DE FR GB IT SE**

(56) References cited:
EP-A- 3 214 078        GB-A- 2 083 259
GB-A- 2 129 181        GB-A- 2 145 265
US-A- 3 833 885        US-A- 3 941 977
US-A- 4 114 027

(73) Proprietor: **HITACHI, LTD.**
**6, Kanda Surugadai 4-chome**
**Chiyoda-ku, Tokyo 100(JP)**

(72) Inventor: **Takahashi, Kenichi**
**1782-1, Ooide Nakajomachi**
**Kitakanbara-gun Niigata-ken(JP)**

(74) Representative: **Patentanwälte Beetz sen. -**
**Beetz jun. Timpe - Siegfried - Schmitt-**
**Fumian**
**Steinsdorfstrasse 10**
**W-8000 München 22(DE)**

## Description

### BACKGROUND OF THE INVENTION

The present invention relates to an automatic transaction system and method in accordance with the precharacterizing part of the independent claims 1 and 5, respectively. Such a system and method are known from US-A-4 114 027 and EP-A1-3 214 078.

In general, automatic transaction systems have a construction in which a single transaction or a variety of transactions can be set so that a user can perform a transaction by inserting his card once.

A system disclosed in the Official Gazette on Japanese Patent Laid-Open No. 32596/1973, for instance, is constructed so that it enables the selection of payment of cash or transfer to another account, by enabling the release of cash or enabling the automatic transfer of a paid amount on data to said account without dispensing cash according to the selection of "payment" or "transfer". Meanwhile, a system disclosed in the Official Gazette on Japanese Patent Laid-Open No. 37342/1978 is designed so that it can operate to transfer an amount equivalent to the amount of money received from a user to an account of a specified transferee read from a card on which information on the deposit of the user and the account number of said account are recorded, thus enabling simple transfer operations to the specified transferee without recording the number of his account.

When one user desires to perform a plurality of transactions in the systems disclosed in the above mentioned documents, however, he is required to conduct initial operations, that are insert a card, enter a personal code number and select a specific transaction for every transaction. He must pull out the card after the completion of one transaction and execute the same initial operations again to perform another transaction. Thus, the user must put the card in and take it out for each transaction, while entering his code number and other data, which results in the disadvantage that plural transactions take much time.

For an automatic banking system (cash dispenser, automatic teller machine), it is most important not to incorrectly execute transaction operations because the system treats cash.

A customer who was not familiar with automatic banking procedures was apt to incorrectly operate the machine even in selecting transaction. Therefore, a simple transaction selection was best for the customer for correctly operating the machine. Namely, this simple system was the arrangement of only single keys to input a single transaction.

The combination key would confuse the inexperienced customer in selecting transaction.

A certain time after the priority date of the present application this kind of automatic banking has been popularly understood. Therefore an increasing number of customers became experienced and became able to operate the machine without failure. Further, the customers have requested to shorten the time period needed for the transactions. Therefore the combination keys have been employed as being useful to the experienced customer to shorten the time in performing a plurality of transactions.

In the field of automatic banking system, each transaction includes a communication with the processing unit which has the account designated by the information on a recording medium to check or renew the same account. Other technical fields, e.g. copying-machines, EXEC-files, TV apparatus don't have a medium with recorded information identifying the user and don't execute a communication designated by the medium.

The mentioned US-A-4 114 027 describes an on-line/off-line automated banking system in which one or more customer-selected transactions are respectively processed upon each pressing of a selection key after one transaction is performed, a remote unit in which the user has inserted its card queries the customer whether or not he desires another transaction . Thereupon the customer can select a further transaction by manipulating the respective selector keys. Thereby the card remains inserted in the remote unit, and is returned to the customer when no further transaction is desired.

EP-A1-3 214 078 describes an automated or non-automated banking system in which one or more customer selected transactions are successively performed after actuation of a selection key after a performance of a former transaction. It is the object of that document to deposit or withdraw only once money although a plurality of transaction is to be performed.

### SUMMARY OF THE INVENTION

An object of the present invention is to provide a system and a method for automatic transactions, by which a plurality of transactions of different kinds can be performed without repeating initial operations. The object is solved in accordance with the invention by the features of the independent claims 1 and 6. In accordance with a preferred embodiment transactions of different kinds are performed simultaneously.

Thereby the time required for transactions can be advantageously reduced, because the number of initial operations including operations to put in and take out a card can be reduced to the minimum and no interval is required for selecting a further transaction between the successive performance of a plurality of transactions.

## BRIEF DESCRIPTION OF THE DRAWINGS

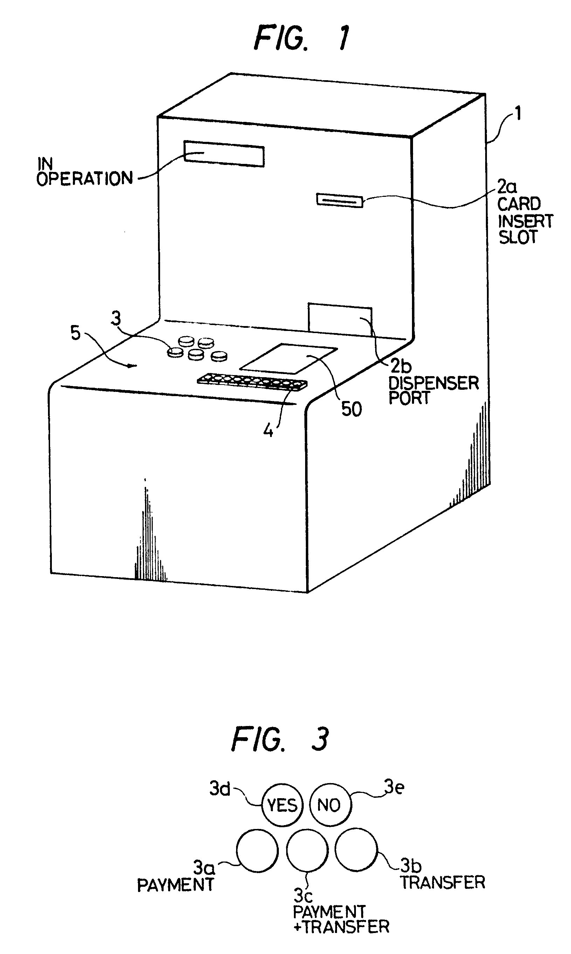

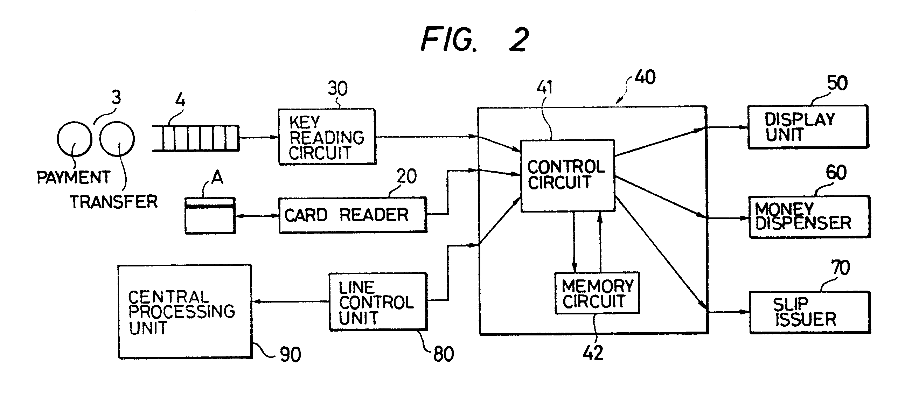

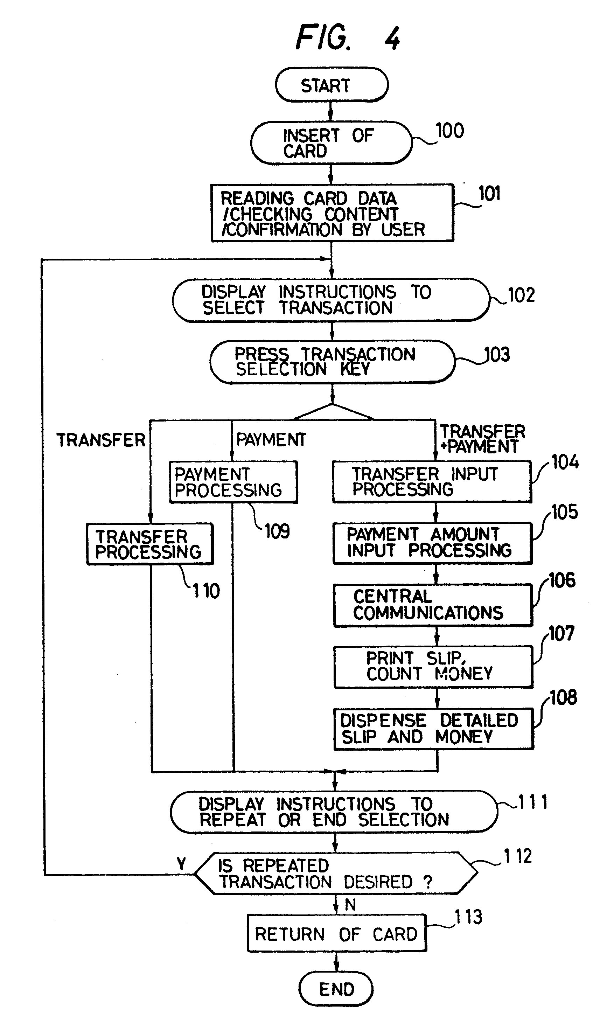

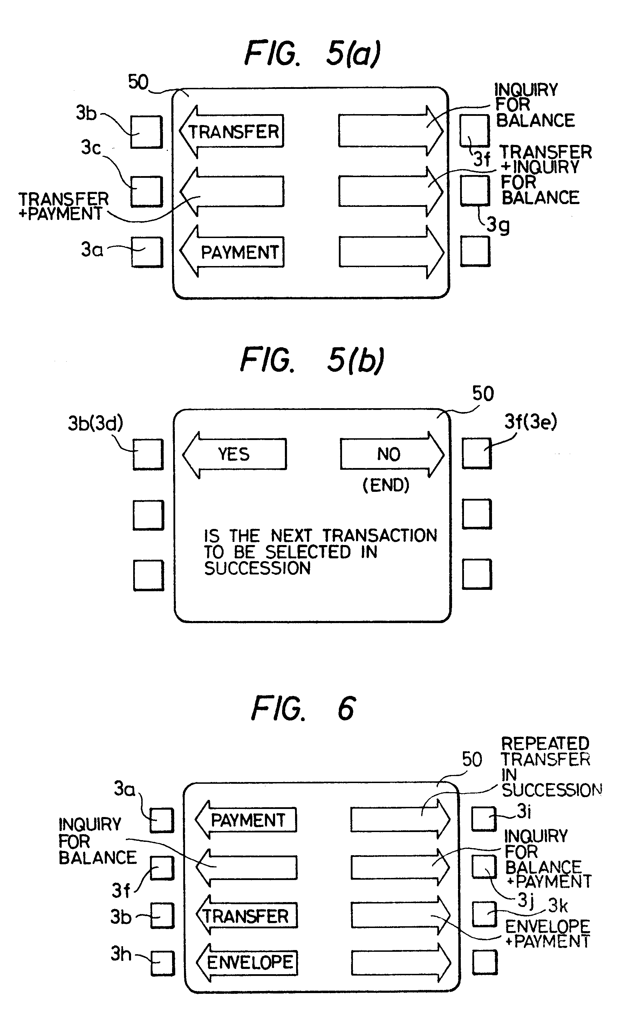

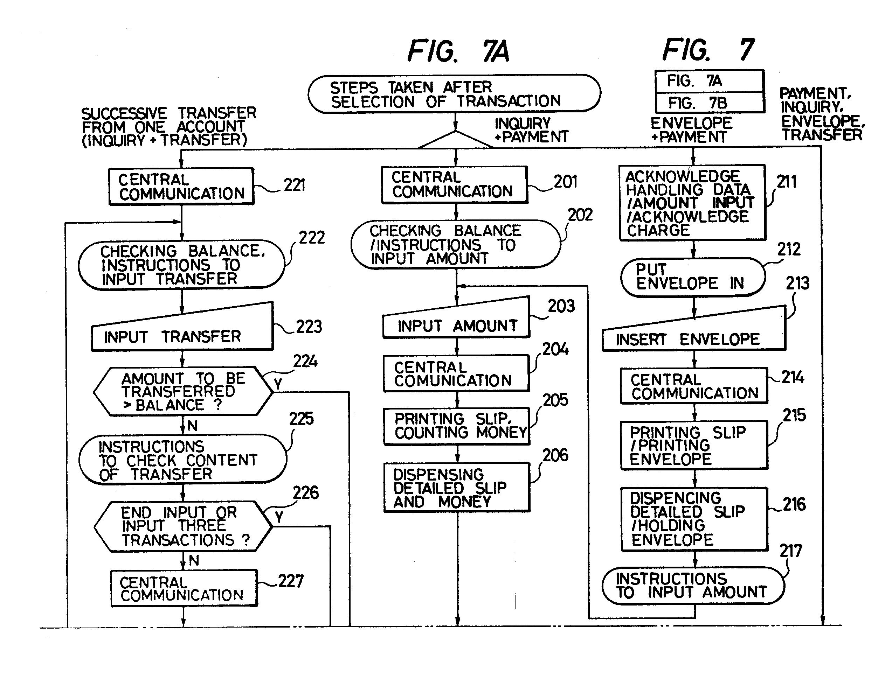

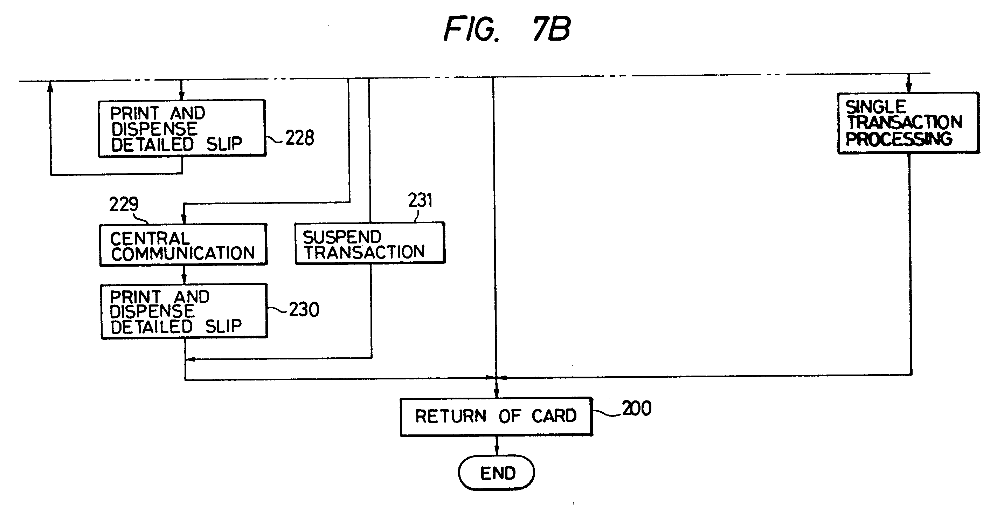

Figure 1 is a plan view of an automatic cash transaction system which is a first embodiment of the present invention; Figure 2 is a block diagram of the automatic cash transaction system; Figure 3 is an enlarged view of transaction selection keys to the operating unit; Figure 4 is a procedure flowchart of a procedure of operations; Figures 5(a) and (b) are illustrations of transaction selections and a judgement selection, respectively, showing another example of combination of the transaction selection keys with a display unit; Figure 6 is an illustration of a third example of combination of the transaction selection keys with the display unit; and Figure 7 is a flowchart of a procedure of operations corresponding to the illustration of Fig. 6, which shows a second embodiment of the automatic transaction system.

## DETAILED DESCRIPTION OF THE INVENTION

The following is a description on the present invention with reference to appended drawings. Figures 1 to 4 show a first embodiment of the present invention which is applied to an automatic cash transaction system.

The automatic cash transaction system of this embodiment is disposed in the front upper portion of a main body 1 of an apparatus, and a card insert slot 2a into which a magnetic card A with identification recorded thereon is inserted removably, and a dispenser port 2b which is provided below said card insert slot to dispense paper money and a detailed transaction slip, are formed therein. Moreover, an operating unit 5 having transaction selection keys 3 to select and input the kind of transaction and amount keys 4 to input the amount of money to be transacted and a personal code number, etc. is provided in a console of the main body 1 to enable a user to conduct a transaction, while a display unit 50 is provided in said console to display instructions for the user.

Figure 2 is a block diagram showing the entire construction of the system. In this figure, numeral 20 denotes a card reader which operates when a magnetic card A is inserted into the card insert slot 2a. The reader conveys the magnetic card A to a prescribed position, reads data from the magnetic card, and returns the card to the insert slot 2a when the transaction is complete. Numeral 30 denotes a key reading circuit which reads the content which the user inputs from the operating unit 5 in response to instructions display from said display unit 50.

Numeral 60 denotes a paper money dispenser which takes out bank notes from a cash box and conveys them to the release port 2b when the transaction is repayment. Numeral 70 denotes a slip issuer which prints the content of the transaction on an entry journal for the financial institution and a detailed transaction slip to be delivered to the user and dispenses said detailed transaction slip to the dispenser port 2b.

Numeral 40 denotes a control unit comprising a control circuit 41 and a memory circuit 42. This unit performs the transfer of data to and from the above-stated devices, controlling each of them in accordance with a program stored in said memory circuit 42. Numeral 90 denotes a central processing unit, which checks and updates information on the user and transmits the result of the processing to the control circuit 41 through a circuit controlling unit 80.

In the present embodiment, as shown in Figure 3, the transaction keys 3 of the aforesaid operating unit 5 comprise single transaction keys 3a and 3b each of which inputs one kind of transaction, and a combination transaction key 3c to input transactions of different kinds in combination. The single transaction keys 3a and 3b input information on payment and transfer transactions respectively in the present embodiment, and by pressing either of the keys, a transaction corresponding thereto can be input. The combination transaction key 3c enables the simultaneous input of information on transactions of different kinds when it is pressed. It functions, for instance, to input data on two kinds of transactions: payment and transfer. By operating the combination transaction key 3c, combined transactions of different kinds can be performed without further input operation by the user.

Also, the operating unit 5 is provided with judgement keys 3d and 3e to input an information on whether a subsequent transaction is to be enabled to be selected. A YES key and a NO key are employed, for instance, as these judgement keys 3d and 3e, and a subsequent transaction can be enabled by pressing the YES key in response to displayed instructions, while no subsequent transaction is conducted when the NO key 3e is depressed.

Next, a transaction will be described with reference to a flowchart shown in Figure 4.

When a user inserts a magnetic card A into the card insert slot 2a (step 100), the card data recorded on said magnetic card A is read by the card reader 20 and sent to the control circuit 41, whereby the content (information) of the deposit of the user is checked (step 101). Hereinafter numerals alone are given in parenthesis. The magnetic card A is returned when the check shows that the content is not normal, while a message "Select transactions" is displayed by the display unit 50 (102) when said check shows normality. In response to the display, the user selects one of the transaction selection keys 3 of the operating unit to input a transaction (103).

When the user pushes the combination key 3c desiring both payment and transfer transactions on the occasion, first a transfer input processing is performed (104), and then a payment amount input processing (105). In said transfer input processing, the data on the transferee's bank, a transfer account and a transferred amount are sent to the control unit 40 when the user inputs this data in a prescribed form by operating the amount key 4 in response to the display in the display unit 50. In the above-stated payment amount input processing, the data on an amount to be repaid are sent to the control unit 40 when the user inputs said data in the prescribed form.

Then, the input data on the transfer and payment amounts are sent from the control unit 40 to the central processing unit 90 through a line control unit 80, and said central processing unit 90 processes the data, checking and renewing information on the user, and transmits data on the propriety of the transaction to the control unit 40 based on the result of the above processing (106). Said control unit 40 performs processing on the basis of the data sent from the central processing unit 90. More precisely, it performs processing to suspend the transaction when it receives from unit 90 an instruction to suspend the transaction, while it drives the slip dispenser 70 and the money dispenser 60 to print the content of the transaction on a slip and to count the number of sheets of paid bank bills and the value thereof (107) and to release the slip with the details of the transaction recorded and the bank bills to the dispenser port 2b (108), when it receives from said unit 90 an instruction to perform the transaction. Then, both contents of transfer and payment transactions are printed on the detailed transaction slip. Thus, the user can receive the detailed transaction slip and the money.

As described above, transactions of two kinds can be performed simultaneously by operating the combination key 3c, and thus said transactions can be performed with just one insertion of the magnetic card A.

When the user pushes the payment key 3a for performing a single transaction, processings similar to steps 105 to 108 above is performed (109), and thereby the detailed transaction slip with a payment amount printed thereon is released. When the user pushes the transfer key 3b, on the other hand, processing similar to steps 104 and 106 to 108 above is performed (110), and thereby the detailed transaction slip with a transferred amount printed thereon is dispensed. Thus, the user can also perform single transactions.

After these transactions are complete, a message "Is another transaction desired?" appears on the display unit 50 (111), and whether or not further transactions are to be enabled is determined (112), based on which of the transaction keys 3d and 3e is pressed by the user.

When the user presses down the NO key 3e, it is determined that a further transaction is not desired. Consequently, the magnetic card A is returned to the card insert slot 2a (113), and when the returned card A is received by the user, the transaction is complete. When the user presses the YES key 3d, it is determined that a further transaction is desired, and processing beginning with step 102 is repeated. By pressing any one of the transaction selection keys 3 with the YES key 3d depressed, single transactions, as well as combined transactions, can be performed.

The transaction selection keys 3 are designed to have specific functions in the embodiment shown in the above-mentioned figures, and three transaction selection keys are provided in this case in accordance with the kinds of transactions. In this connection, the number of the transaction selection keys would be increased unfavorably with an increase in the kinds of transactions. This unfavorable increase in the number of keys can be prevented by a construction in which the transaction selection keys are designed so that they can be operated to input functions corresponding to expressions displayed on a screen of a display unit. The display unit 50 is so constructed that messages are displayed on the CRT screen, a caption film or the like, as shown in Figure 5 (a), while the keys 3 are arranged at positions corresponding to said various selection messages. When a key 3 is pressed in this construction, the function indicated by the message at a position corresponding to said key 3 can be input. Therefore, when a key 3b in the upper left portion in Fig. 5 (a) is assigned to operate for transfer, and when the same key 3b in the upper left portion in Fig. 5 (b) is designed to fulfill the same function as the YES key 3d, the increase in the number of keys can be prevented, while the same effect as with the first embodiment can be obtained. While the kinds of transactions are limited to payment, transfer, and payment with transfer, in the embodiment shown in the above-mentioned figures, they can be increased, as shown in Figure 6, by enlarging the dimensions of the screen of the display unit 50, by increasing the number of keys provided, or by other means.

Figure 7 is a flowchart based on Fig. 6 which shows a second embodiment of the present invention. In this embodiment, the above-described transaction selection keys 3 are so designed as to be able to input single transactions such as payment, transfer, balance inquiry and dispensing an envelope, as well as combined transactions such as payment with inquiry, payment with the dispensed envelope, and to input only transfers repeatedly.

The following is a description on the operations of this embodiment with reference to Fig. 7.

When a user presses a key 3j for inquiry + payment, the control unit 40 and the central processing unit 90 (201) communicate for first transaction (inquiry for balance), and the control unit 40 causes the display unit 50 to display the user's balance. Then, the display unit 50 displays message "Input an amount to be repaid after checking the balance" (202).

After the amount is input by the user (203), communications is made again with the central processing unit 90 (204) for second transaction (payment). When an instruction to allow a transaction is given as the result of the above processing, a slip is printed and money is counted (205), a detailed transaction slip and the paper money are dispensed (206), the magnetic card A is returned (200), and the transaction is complete.

When a key 3k for an envelope + payment is input by the user, information on the amount and other data which is required for printing the envelope is also input thereby (211), and then message "Put the envelope in" is displayed (212). When the envelope is put in in response to said message, communications are conducted with the central processing unit 90 (first transaction), a slip and the envelope are printed in response to the communications (215), and then the envelope is put in a cash box to be held, while a detailed transaction slip is dispensed (216). Next, after the envelope dispensing transaction has ended, a message directing payment transaction is displayed (217), steps 203 to 206 second transaction and 200 are performed in the same way as in the transaction of inquiry + payment, and the transaction is ended.

When the user presses a combination transaction key 3i for repeated transfer, communications are made with the central processing unit 90 (221), and after information on a balance displayed in accordance with the result of the above processing has been checked by the user, an expression "Input transfer after checking the balance" is displayed by the display unit 50 (222). When an amount to be transferred is input by the user (223), it is compared with the balance (224). If the comparison shows that the amount to be transferred is greater than that of the balance, a processing is conducted the transaction is suspended (231). If the amount to be transferred is smaller than that of the balance, a display is made directing the confirmation of the content of the transfer (225). When the user inputs his confirmation, it is determined that the confirmation is input, while it is determined whether the operation of the above confirmation input is the third one (for the third transaction) (226).

When the operation of the confirmation input is the first one (for the first transaction), communication is conducted with the central processing unit (227), and the content of the transaction is printed on a slip according to an instruction to allow the transaction, and a detailed transaction slip thus prepared is dispensed (228). Subsequently, 222 to 228 (second transaction) are repeated. When the confirmation input is determined to be the third or higher at step 226, processsong described hereunder is conducted. When the confirmation input is the third one, steps 226 to 229 and 230 are performed, and the detailed slip is dispensed. In this case, the system is set by the operation of the combination transaction key 3i for repeated transfer so that the first to third transfers can be performed repeatedly provided that the transferred amount is within the balance.

A description of single transactions is omitted, since single transactions are performed in this case as described with reference to Fig. 4.

In any of the above-described embodiments, the kind of transaction is selected after the magnetic card A is inserted. It is a matter of course, in this connection, that a program can be altered so that the transaction can be selected before the magnetic card A is inserted. Moreover, an on-line system in which the control unit 40 is connected to the central processing unit 90 is shown as an example in these embodiments. These embodiments can also be adapted for an off-line system by using a construction in which information required for transactions is stored in the memory circuit 42 of the control unit 40 and this unit performs the same processing as the central processing unit 90 based on said information. Also, the magnetic cards are employed as examples in these embodiments. However, the present invention is not limited to these cards; it can be applied also to a system in which IC cards or optical stripe cards, for instance, are employed.

As described above, the present invention is so constructed that not only transactions of different kinds, but also transactions of the same kind, can be performed as needed by pressing the combination transaction keys; hence, a plurality of transactions are performed without re-inserting the card and re-inputting personal code and transaction selection. With the present invention, therefore, it is unnecessary for one user to repeat such operations as putting the card in and taking it out, selecting a transaction and entering a personal code number, which achieves remarkable effects of saving time and shortening the time required for transactions.

**Claims**

1. A system for automatic transactions, comprising:

   a medium reader (20) which receives a medium (card A) from a user for reading data from said medium in which at least information identifying the user is recorded;

   an operating unit (30) which is provided with transaction selection keys (3) to input the kind of transaction and a numerical key (4) for inputting numerical values;

   a display unit (50) which displays instructions for the user;

   a control unit (40) which performs transactions of prescribed kind, based on data read from said medium and operations of said transaction selection keys (3),

   **characterized** in that

   said transaction selection keys (3) comprise at least one combination key (3c) to input an information corresponding to a first and a second transaction, and

   said control unit (40) performs automatically a first transaction, controls said display unit (50) to display a result of the performance of the first transaction for checking the result and inputting data for the second transaction, and performs a second transaction after said display based on the inputted data and the previous operation of said combination key in response to one input of a personal code by the user.

2. A system according to claim 1, in which said control unit (40) performs an inquiry transaction as the first transaction and a payment transaction as the second transaction and controls said display unit (50) to display a balance as the result of the first transaction for checking the balance and inputting an amount to be paid upon one operation of said combination key.

3. A system according to claim 1, in which said control unit (40) performs a plurality of the same kind of transactions upon one operation of said combination key.

4. A system according to claim 1, in which said control unit (40) performs a plurality of transactions successively based on the operation of said combination key in response to one input of a personal code number by the user.

5. A method for automatic transactions, comprising the steps of receiving a medium (card A) of a user;

   reading data from said medium including information identifying the user;

   displaying instructions to select a kind of transaction and inputting the kind of transaction based on a displayed instruction corresponding to the kind of transaction, and performing this kind of transaction responsive to the respective input of this kind of transaction, and the data read from said medium;

   **characterized** in that

   the displayed instructions further correspond to combined transactions when the selected transaction is a combined transaction, a first transaction is performed automatically, a result of the performance of the first transaction is displayed for checking the result and inputting data for the second transaction before the second transaction, and the second transaction is performed successively after said display based on the inputted data and the previous operation of said combination key in response to one input of a personal code by the user.

6. A method for automatic transaction according to claim 5, in which said plurality of transactions include the same kind of transaction.

7. A method for automatic transaction according to claim 5, in which said plurality of transactions include different kinds of transaction.

**Patentansprüche**

1. System für automatische Vorgänge mit

   einem Trägerleser (20), der einen Träger (Karte A) eines Benützers zum Lesen von Daten vom Träger empfängt, wobei zumindest Informationen aufgezeichnet sind, die den Benützer identifizieren,

   einer Betätigungseinheit (30), die Vorgangsauswahltasten (3) aufweist, um die Art eines Vorgangs einzugeben, sowie eine numerische Taste (4) zum Eingeben numerischer Werte,

   einer Anzeigeeinheit (50), die Anweisungen für den Benützer anzeigt,

   einer Steuerungseinheit (40), die auf der Grundlage der von dem Träger gelesenen Daten sowie der Bedienung der Vorgangsauswahltasten (3) einen Vorgang der vorgegebenen Art durchführt,

   dadurch **gekennzeichnet,** daß

   die Vorgangsauswahltasten (3) zumindest eine Kombinationstaste (3c) zum Eingeben einer Information entsprechend einem ersten und einem zweiten Vorgang aufweisen, und

die Steuerungseinheit (40) auf eine Eingabe eines persönlichen Kodes durch den Benützer hin automatisch einen ersten Vorgang durchführt, die Anzeigeeinheit (50) zur Darstellung des Ergebnisses der Durchführung des ersten Vorgangs steuert, um das Ergebnis überprüfen und Daten für den zweiten Vorgang eingeben zu können, und auf der Grundlage der eingegebenen Daten und der vorherigen Betätigungen der Kombinationstaste nach der Anzeige einen zweiten Vorgang durchführt.

2. System nach Anspruch 1, bei dem die Steuerungseinheit (40) einen Abfragevorgang als den ersten Vorgang durchführt und einen Zahlvorgang als den zweiten Vorgang durchführt und die Anzeigeeinheit (50) so steuert, daß sie als Ergebnis des ersten Vorgangs einen Kontostand anzeigt, um den Kontostand zu überprüfen, wobei auf eine Betätigung der Kombinationstaste hin ein zu zahlender Betrag eingegeben wird.

3. System nach Anspruch 1, bei dem die Steuerungseinheit (40) auf eine Betätigung der Kombinationstaste hin mehrere gleichartige Vorgänge durchführt.

4. System nach Anspruch 1, bei dem die Steuerungseinheit (40) auf die Betätigung der Kombinationstaste und auf die einmalige Eingabe einer persönlichen Kodenummer durch den Benützer hin mehrere Vorgänge hintereinander abfolgend durchführt.

5. Verfahren für automatische Vorgänge, mit den Schritten Empfangen eines Trägers (Karte A) eines Anwenders,
Lesen von Daten von dem Träger einschließlich Informationen, die den Benützer identifizieren,
Anzeigen von Anweisungen zum Auswählen einer Art eines Vorgangs und Eingeben der Art des Vorgangs auf der Grundlage der entsprechend der Art des Vorgangs angezeigten Anweisung, und Durchführen dieser Art des Vorgangs nach Maßgabe der jeweiligen Eingabe der Art des Vorgangs sowie der vom Träger gelesenen Daten,
dadurch **gekennzeichnet,** daß
die angezeigten Anweisungen außerdem kombinierten Vorgängen entsprechen, wenn der ausgewählte Vorgang ein kombinierter Vorgang ist, und daß auf eine Eingabe eines persönlichen Kodes durch den Benützer hin ein erster Vorgang automatisch durchgeführt wird, ein Ergebnis der Durchführung des ersten Vorgangs zum Überprüfen des Ergebnisses sowie zum Eingeben von Daten für den zweiten Vorgang vor dem zweiten Vorgang angezeigt wird, und darauffolgend nach der Anzeige auf der Grundlage der eingegebenen Daten sowie auf die vorherige Betätigung der Kombinationstaste hin, der zweite Vorgang durchgeführt wird.

6. Verfahren für automatische Vorgänge nach Anspruch 5, bei dem die mehreren Vorgänge gleichartige Vorgänge aufweisen.

7. Verfahren für automatische Vorgänge nach Anspruch 5, bei dem die mehreren Vorgänge verschiedenartige Vorgänge aufweisen.

**Revendications**

1. Système pour transactions automatiques, comprenant :
un lecteur (20) de supports d'enregistrement, qui reçoit un support (carte A) de la part d'un utilisateur pour lire des données à partir dudit support dans lequel est enregistrée au moins une information identifiant l'utilisateur;
une unité opérationnelle (30) qui est équipée de touches (3) de sélection de transactions pour introduire le type de transaction et une touche numérique (4) pour introduire des valeurs numériques;
une unité d'affichage (50) qui affiche des instructions pour l'utilisateur;
une unité de commande (40) qui exécute des transactions du type prescrit, sur la base de données lues à partir dudit support et d'actionnements desdites touches (3) de sélection de transactions,
caractérisé en ce que
lesdites touches (3) de sélection de transactions comprennent au moins une touche de combinaison (3c) pour introduire une information correspondant à une première et à une seconde transaction, et
ladite unité de commande (40) exécute automatiquement une première transaction, commande ladite unité d'affichage (50) pour qu'elle affiche un résultat de l'exécution de la première transaction afin de contrôler le résultat et d'introduire des données pour la seconde transaction, et exécute une seconde transaction après ledit affichage sur la base des données introduites et de l'actionnement précédent de ladite touche de combinaison en réponse à une entrée d'un code personnel par l'utilisateur.

2. Système selon la revendication 1, dans lequel ladite unité de commande (40) exécute une transaction de demande en tant que première transaction et une transaction de paiement en tant que seconde transaction et commande ladite unité d'affichage (50) pour l'affichage du solde en tant que résultat de la première transaction pour contrôler le solde et introduire une valeur devant être payée lors d'un actionnement de ladite touche de combinaison.

3. Système selon la revendication 1, dans lequel ladite unité de commande (40) exécute une pluralité du même type de transactions lors d'un actionnement de ladite touche de combinaison.

4. Système selon la revendication 1, dans lequel ladite unité de commande (40) exécute une pluralité de transactions basées successivement sur l'actionnement de ladite touche de combinaison en réponse à une entrée d'un numéro de code personnel par l'utilisateur.

5. Procédé pour effectuer des transactions automatiques, comprenant les étapes consistant à recevoir un support (carte A) d'un utilisateur; lire des données à partir dudit support, y compris une information identifiant l'utilisateur; afficher des instructions pour sélectionner un type de transaction et introduire le type de transaction basé sur une instruction d'affichage correspondant au type de transaction, et exécuter ce type de transaction en réponse à l'entrée respective de ce type de transaction, et aux données lues à partir dudit support; caractérisé en ce que les instructions affichées correspondent en outre à des transactions combinées lorsque la transaction sélectionnée est une transaction combinée, qu'une première transaction est exécutée automatiquement, qu'un résultat de l'exécution de la première transaction est affiché pour le contrôle de ce résultat et l'introduction de données pour la seconde transaction avant cette seconde transaction, et que la seconde transaction est exécutée successivement après ledit affichage sur la base des données introduites et de l'actionnement précédent de ladite touche de combinaison en réponse à une entrée d'un code personnel par l'utilisateur.

6. Procédé pour effectuer une transaction automatique selon la revendication 5, selon lequel ladite pluralité de transactions inclut le même type de transaction.

7. Procédé pour effectuer une transaction automatique selon la revendication 5, selon lequel ladite pluralité de transactions inclut différents types de transactions.

# *FIG.* 1

IN OPERATION

2a CARD INSERT SLOT

5

3

2b DISPENSER PORT

50

4

1

# *FIG.* 3

3d YES  NO 3e

3a PAYMENT

3c PAYMENT +TRANSFER

3b TRANSFER

# FIG. 2

PAYMENT  TRANSFER

3  4

30
KEY READING CIRCUIT

A
20
CARD READER

CENTRAL PROCESSING UNIT
90

LINE CONTROL UNIT
80

41
40
CONTROL CIRCUIT

MEMORY CIRCUIT
42

50
DISPLAY UNIT

60
MONEY DISPENSER

70
SLIP ISSUER

EP 0 170 278 B1

## FIG. 4

```
                    ( START )
                        │
                        ▼
              ┌─────────────────────┐
              │  INSERT  OF         │──── 100
              │  CARD               │
              └─────────────────────┘
                        │
                        ▼
              ┌─────────────────────┐
              │ READING CARD DATA   │──── 101
              │ /CHECKING CONTENT   │
              │ /CONFIRMATION BY USER│
              └─────────────────────┘
                        │
                        ▼
              ┌─────────────────────┐
              │ DISPLAY INSTRUCTIONS TO │── 102
              │ SELECT  TRANSACTION     │
              └─────────────────────┘
                        │
                        ▼
              ┌─────────────────────┐
              │ PRESS TRANSACTION   │──── 103
              │ SELECTION KEY       │
              └─────────────────────┘
```

TRANSFER        PAYMENT        TRANSFER +PAYMENT

| PAYMENT PROCESSING | TRANSFER INPUT PROCESSING |── 104

TRANSFER PROCESSING ── 110        109

PAYMENT AMOUNT INPUT PROCESSING ── 105

CENTRAL COMMUNICATIONS ── 106

PRINT SLIP, COUNT MONEY ── 107

DISPENSE DETAILED SLIP AND MONEY ── 108

DISPLAY INSTRUCTIONS TO REPEAT OR END SELECTION ── 111

Y ◄─ IS REPEATED TRANSACTION DESIRED ? ── 112

N

RETURN OF CARD ── 113

( END )

## FIG. 5(a)

50

3b TRANSFER INQUIRY FOR BALANCE

3c TRANSFER +INQUIRY FOR BALANCE 3f

TRANSFER +PAYMENT

3g

3a PAYMENT

## FIG. 5(b)

50

3b(3d) YES NO (END) 3f(3e)

IS THE NEXT TRANSACTION TO BE SELECTED IN SUCCESSION

## FIG. 6

50 REPEATED TRANSFER IN SUCCESSION

3a PAYMENT 3i

INQUIRY FOR BALANCE

3f INQUIRY FOR BALANCE +PAYMENT 3j 3k

3b TRANSFER ENVELOPE +PAYMENT

3h ENVELOPE

## FIG. 7A  FIG. 7

| FIG. 7A |
|---|
| FIG. 7B |

FIG. 7A · FIG. 7B

PAYMENT, INQUIRY, ENVELOPE, TRANSFER

STEPS TAKEN AFTER SELECTION OF TRANSACTION

SUCCESSIVE TRANSFER FROM ONE ACCOUNT (INQUIRY + TRANSFER)

INQUIRY + PAYMENT

ENVELOPE + PAYMENT

CENTRAL COMMUNICATION — 221

CHECKING BALANCE, INSTRUCTIONS TO INPUT TRANSFER — 222

INPUT TRANSFER — 223

AMOUNT TO BE TRANSFERRED > BALANCE ? — 224  Y

N

INSTRUCTIONS TO CHECK CONTENT OF TRANSFER — 225

END INPUT OR INPUT THREE TRANSACTIONS ? — 226  Y

N

CENTRAL COMMUNICATION — 227

CENTRAL COMMUNICATION — 201

CHECKING BALANCE /INSTRUCTIONS TO INPUT AMOUNT — 202

INPUT AMOUNT — 203

CENTRAL COMUNICATION — 204

PRINTING SLIP, COUNTING MONEY — 205

DISPENSING DETAILED SLIP AND MONEY — 206

ACKNOWLEDGE HANDLING DATA /AMOUNT INPUT /ACKNOWLEDGE CHARGE — 211

PUT ENVELOPE IN — 212

INSERT ENVELOPE — 213

CENTRAL COMMUNICATION — 214

PRINTING SLIP /PRINTING ENVELOPE — 215

DISPENCING DETAILED SLIP /HOLDING ENVELOPE — 216

INSTRUCTIONS TO INPUT AMOUNT — 217

EP 0 170 278 B1

13

## FIG. 7B

```
          PRINT AND
          DISPENSE          228          SINGLE
          DETAILED SLIP                  TRANSACTION
                                         PROCESSING

229                    231
  CENTRAL                SUSPEND
  COMMUNICATION          TRANSACTION

  PRINT AND
  DISPENSE          230
  DETAILED SLIP


              RETURN OF CARD        200

                    END
```

EP 0 170 278 B1